# EUROPÄISCHE PATENTSCHRIFT

(11) **EP 1 805 567 B1**
(45) Veröffentlichungstag und Bekanntmachung des Hinweises auf die Patenterteilung: **29.07.2009**
(21) Anmeldenummer: 05794649.3
(22) Anmeldetag: 27.09.2005
(51) Int. Cl.: G05B 19/042, G05B 19/05

(54) **VERFAHREN UND AUTOMATISIERUNGSSYSTEM ZUM BEDIENEN UND/ODER BEOBACHTEN MINDESTENS EINES FELDGERÄTES**
METHOD AND AUTOMATION SYSTEM FOR OPERATING AND/OR OBSERVING AT LEAST ONE FIELD DEVICE
PROCEDE ET SYSTEME D'AUTOMATISATION POUR COMMANDER ET/OU SURVEILLER AU MOINS UN APPAREIL DE TERRAIN

(30) Priorität: 18.10.2004 DE 102004051130
(43) Veröffentlichungstag der Anmeldung: 11.07.2007
(73) Patentinhaber: SIEMENS AKTIENGESELLSCHAFT, 80333 München (DE)
(72) Erfinder: ARZIG, Klaus, 90592 Schwarzenbruck (DE)
(86) Internationale Anmeldenummer: PCT/EP2005/054828
(87) Internationale Veröffentlichungsnummer: WO 2006/042779

(56) Entgegenhaltungen:
- DE-C1- 10 030 329
- US-A1- 2001 056 304
- SEIFERT B: "FEHLERTOLERANTER INTERBUS MIT DOPPELTEM FERNBUS" ELEKTROTECHNISCHE ZEITSCHRIFT - ETZ, VDE VERLAG GMBH, BERLIN, DE, Bd. 117, Nr. 1/2, Januar 1996 (1996-01), Seiten 14-16, XP000591478 ISSN: 0948-7387

## Beschreibung

Die Erfindung betrifft ein Verfahren zum Bedienen und/oder Beobachten mindestens eines Feldgerätes, bei dem ein erstes eine Automatisierungssoftware ausführendes Zentralsteuergerät einen ersten Befehl zum Steuern des mindestens einen Feldgerätes erzeugt und diesen ersten Befehl an das mindestens eine Feldgerät sendet, zumindest ein weiteres die Automatisierungssoftware ausführendes Zentralsteuergerät (1b) einen zweiten gleichartigen Befehl zum Steuern des mindestens einen Feldgerätes erzeugt und diesen zweiten Befehl an das mindestens eine Feldgerät sendet, sowie ein entsprechendes Automatisierungssystem.

Zur Steuerung verschiedenster Anlagen und Prozesse werden heutzutage üblicherweise sogenannte Automatisierungssysteme eingesetzt. Bei den zu steuernden Anlagen und Prozessen kann es sich beispielsweise um chemische oder verfahrenstechnische Prozesse, um industrielle Fertigungsprozesse oder um Verteilprozesse von Energie, Gas oder Wasser handeln. Ebenso kann es sich auch um einen Verteilprozess für Informationen über Daten- oder Kommunikationsnetzwerke handeln.

Solche automatisiert zu steuernden Anlagen und Prozesse weisen häufig in Prozessnähe angebrachte sogenannte Feldgeräte auf, mit denen Messsignale aus dem Prozess- bzw. der Anlage aufgenommen werden und mittels Aktoren auf den Prozess bzw. die Anlage eingewirkt werden kann. Bei solchen Feldgeräten kann es sich beispielsweise um leit- oder schutztechnische Feldgeräte handeln, wobei der Begriff "Feldgerät" nicht ausschließlich auf einen Einsatz im Feld beschränkt ist, sondern beispielsweise auch solche Geräte umfassen kann, die bei der Gebäudeautomatisierung oder in Telekommunikationsanlagen eingesetzt werden.

Häufig sind die besagten Feldgeräte über Datenverbindungen mit einem zentralen Steuergerät verbunden, von dem sie auszuführende Befehle empfangen und an das sie aus aufgenommenen Messsignalen generierte Messdaten sowie Meldungen weitereben.

Zur Minimierung des Ausfallsrisikos einer Automatisierungsanlage werden üblicherweise verschiedene Komponenten redundant, d. h. zumindest zweifach, ausgeführt, so dass beim Ausfall einer ersten Komponente die entsprechende Funktion von einer redundanten Komponente übernommen werden kann. So ist z. B. meist die Datenverbindung zwischen einem Zentralsteuergerät und den Feldgeräten redundant ausgeführt. Dies kann beispielsweise bedeuten, dass alle Datenleitungen doppelt vorhanden oder in einer Ringstruktur ausgebildet sind.

Weiterhin werden üblicherweise auch zentrale Steuergeräte redundant ausgeführt. Hierzu ist es generell üblich, zwei zentrale Steuergeräte vorzusehen, von denen eines als führendes Zentralsteuergerät im Normalfall die komplette Steuerung des Automatisierungssystems übernimmt. Über eine hochperformante Synchronisations-Datenübertragungsleitung ist dieses führende Zentralsteuergerät mit einem weiteren Zentralsteuergerät verbunden, das zeitsynchronisiert genau dieselben Aktionen durchführt wie das führende Zentralsteuergerät. Beim Ausfall des führenden Zentralsteuergerätes kann dann einfach auf das weitere Zentralsteuergerät umgeschaltet werden, und das Automatisierungssystem kann unterbrechungsfrei weiterbetrieben werden.

Aus der deutschen Patentschrift DE 100 30 329 C1 ist ein redundantes Steuerungssystem mit zwei Zentralsteuergeräten bekannt, die dieselbe Automatisierungssoftware abarbeiten und beide an eine Peripherieeinheit absenden. Die Peripherieeinheit prüft eine Wertigkeit von den jeweiligen Steuerdaten zugeordneten Lebenszeichendaten und führt diejenigen Steuerdaten aus, denen die höherwertigen Lebenszeichendaten zugeordnet sind.

Der Erfindung liegt die Aufgabe zugrunde, ein Verfahren sowie ein Automatisierungssystem zum Bedienen und/oder Beobachten von mindestens einem Feldgerät anzugeben, das möglichst aufwandsarm betrieben werden kann.

Zur Lösung dieser Aufgabe hinsichtlich des Verfahrens wird ein Verfahren der eingangs genannten Art vorgeschlagen, bei dem das mindestens eine Feldgerät die gesendeten ersten und zweiten Befehle empfängt und einzig denjenigen der gleichartigen ersten und zweiten Befehle ausführt, der zuerst bei ihm eintrifft.

Dadurch, dass beide Zentralsteuergeräte unabhängig voneinander dieselbe Automatisierungssoftware ausführen und jeweils gleichartige erste und zweite Befehle an das mindestens eine Feldgerät senden, kann auf eine aufwendige Synchronisation der Zentralsteuergeräte verzichtet werden.

Dem erfindungsgemäßen Verfahren liegt die Erkenntnis zugrunde, dass in den meisten Fällen von einer Synchronisierung der Zentralsteuergeräte abgesehen werden kann, da diese dieselbe Automatisierungssoftware auf dieselbe Weise ausführen und somit zwar nicht zeitsynchron arbeiten, aber dennoch gleichartige, d. h. inhaltsgleiche Befehle generieren und auf gleiche Weise reagieren. Zwar werden bei dem erfindungsgemäßen Verfahren einige Befehle mehrfach an das mindestens eine Feldgerät gesendet, meist erzeugt aber ein wiederholtes Durchführen eines gleichartigen Befehls durch das Feldgerät lediglich eine Fehlermeldung. So kann beispielsweise ein Leistungsschalter eines Energieverteilungsnetzes nicht nochmals geöffnet werden, wenn er bereits zuvor geöffnet worden ist.

Damit jedoch gerade bei komplexen Automatisierungssystemen das mindestens eine Feldgerät nicht sämtliche Befehle mehrfach ausführt, ist vorgesehen, dass das mindestens eine Feldgerät einzig denjenigen der gleichartigen ersten und zweiten Befehle ausführt, der zuerst bei ihm eintrifft. Hierbei prüft das Feldgerät beim Eingang eines neuen Befehls, ob ein gleichartiger Befehl bereits zuvor schon eingegangen ist, und ignoriert ihn gegebenenfalls. Dadurch werden nur solche Befehle ausgeführt, die zuerst von dem Feldgerät empfangen werden. Eine solche Überprüfung ist vergleichsweise einfach zu realisieren, wodurch der Aufwand für die gesamte Automatisierungsanlage gering bleibt.

Wenn das Feldgerät selbst auch Meldungen und Messdaten - beispielsweise aus Messsignalen angeschlossener Sensoren - erzeugt, kann vorteilhaft vorgesehen sein, dass das zumindest eine Feldgerät Messdaten und/oder Meldungen erzeugt und diese sowohl an das erste als auch an das mindestens eine weitere Zentralsteuergerät sendet. Auf diese Weise bekommen alle Zentralsteuergeräte dieselben Eingangsinformationen von dem zumindest einen Feldgerät geliefert, wodurch ein Datenabgleich der Zentralsteuergeräte untereinander unnötig wird.

Gemäß einer vorteilhaften Ausführungsform des erfindungsgemäßen Verfahrens kann ferner vorgesehen sein, dass das mindestens eine Feldgerät während des Ausführens eines empfange nen Befehls die Annahme weiterer Befehle blockiert. Auf diese Weise wird beispielsweise verhindert, dass einander entgegenstehende Befehle nahezu gleichzeitig ausgeführt werden sollen (beispielsweise Öffnen und Schließen eines Leistungsschalters). Außerdem kann hierdurch verhindert werden, dass die Ausführung eines aus mehreren Einzelbefehlen bestehenden Befehls (Befehlsfolge) durch einen nicht zu der Befehlsfolge gehörenden Befehl unterbrochen wird.

Außerdem kann gemäß einer weiteren vorteilhaften Ausführungsform des erfindungsgemäßen Verfahrens vorgesehen sein, dass das zumindest eine Feldgerät nach dem Empfang eines Befehls die Annahme eines gleichartigen Befehls für eine vorgegebene Zeitdauer blockiert. Auf diese Weise kann sehr einfach die Ausführung desselben Befehls innerhalb einer vorgegebenen Zeitdauer verhindert werden. Nach Ablauf der Zeitdauer kann der Befehl jedoch erneut ausgeführt werden. Hierbei ist die Zeitdauer so zu bemessen, dass sie lediglich die Ausführung solcher Befehle sperrt, die durch das nicht synchrone Arbeiten der Zentralsteuergeräte mehrfach erzeugt werden.

Eine weitere vorteilhafte Ausführungsform des erfindungsgemäßen Verfahrens sieht ferner vor, dass das mindestens eine Feldgerät zum Überprüfen, ob ein empfangener Befehl bereits ausgeführt worden ist, alle ausgeführten Befehle in einer Befehlsliste speichert und überprüft, ob dieser empfangene Befehl bereits in der Befehlsliste gespeichert ist, und das Ausführen solcher Befehle blockiert, die bereits in der Befehlsliste gespeichert sind.

In diesem Zusammenhang kann außerdem auch vorgesehen sein, dass das zumindest eine Feldgerät nur das Ausführen der letzten n Befehle blockiert, die in der Befehlsliste gespeichert worden sind, wobei n eine vorgebbare Anzahl von Befehlen ist. Hiermit wird wiederum sichergestellt, dass das Feldgerät nur solche Befehle blockiert, die wirklich redundant sind, und nicht nach Auftreten eines Befehls für alle Zeiten dessen Ausführung sperrt.

Alternativ dazu kann in diesem Zusammenhang auch vorgesehen sein, dass gespeicherte Befehle nach einer vorgebbaren Zeitdauer wieder aus der Befehlsliste gelöscht werden. Hierdurch wird einerseits wiederum erreicht, dass nur wirklich redundante Befehle nicht mehrfach ausgeführt werden, und andererseits der Speicherbedarf der Befehlsliste minimiert.

Gemäß einer weiteren vorteilhaften Ausführungsform des erfindungsgemäßen Verfahrens ist außerdem vorgesehen, dass die Zentralsteuergeräte von ihnen jeweils zugeordneten lokalen Bedieneinrichtungen Anweisungen entgegennehmen und daraus die ersten und zweiten Befehle für das mindestens eine Feldgerät erzeugen; ebenso empfangen und die Zentralsteuergeräte von dem mindestens einem Feldgerät Messdaten und/oder Meldungen und übertragen sie an die lokalen Bedieneinrichtungen. Auf diese Weise können die Zentralsteuergeräte mittels einer Vorortbedienung betrieben werden.

Eine weitere vorteilhafte Ausführungsform des erfindungsgemäßen Verfahrens sieht vor, dass die Zentralsteuergeräte von zumindest einer ihnen übergeordneten Leitstelleneinrichtung Anweisungen entgegennehmen und daraus die ersten und zweiten Befehle für das mindestens eine Feldgerät erzeugen; ebenso empfangen die Zentralsteuergeräte von dem mindestens einem Feldgerät Messdaten und/oder Meldungen und übertragen diese an die Leistelleneinrichtung. Auf diese Weise können die Zentralsteuergeräte einfach mittels eines übergeordneten Leitstellengerätes bedient werden. Hierbei kann das Leitstellengerät alternativ zu einer Vorortbedienung oder zusätzlich zu einer solchen vorhanden sein.

In diesem Zusammenhang ist ferner gemäß einer weiteren vorteilhaften Ausführungsform des erfindungsgemäßen Verfahrens vorgesehen, dass ein Ausfall eines Zentralsteuergerätes von einer übergeordneten Leitstelleneinrichtung und/oder einer dem ausgefallenen Zentralsteuergerät zugeordneten Bedieneinrichtung angezeigt wird. Hierdurch kann nämlich besonders einfach schon an der jeweiligen Bedieneinrichtung erkannt werden, ob ein Zentralsteuergerät ausgefallen ist, und somit auf das andere Zentralsteuergerät zugegriffen werden.

Eine weitere vorteilhafte Ausführungsform des erfindungsgemäßen Verfahrens sieht außerdem vor, dass das erste Zentralsteuergerät und das mindestens eine weitere Zentralsteuergerät mittels einer Datenleitung verbunden sind und über diese Datenleitung Lebenszeichensignale übertragen. Auf diese weise können die Zentralsteuergeräte sich gegenseitig auf ihre korrekte Funktion überprüfen.

In diesem Zusammenhang kann vorgesehen sein, dass die Zentralsteuergeräte ein Master-Zentralsteuergerät festlegen, das allein Befehlsfolgen an das mindestens eine Feldgerät sendet, die übrigen Zentralsteuergeräte einen Ausfall des Master-Zentralsteuergerätes an einem Ausbleiben von Lebenszeichen des Master-Zentralsteuergerätes erkennen und beim Ausfall des Master-Zentralsteuergerätes ein neues Master-Zentralsteuergerät festlegen. Die Festlegung eines Master-Zentralsteuergerätes eignet sich insbesondere dann, wenn Befehlsfolgen (mehrere aufeinanderfolgende Befehle) oder abgeleitete Befehle (aus Meldungen der Feldgeräte abgeleitete Befehle bzw. Reaktionen) auftreten. Durch die gegenseitige Überwachung können die Zentralsteuergeräte automatisch von einem ausgefallenen Zentralsteuergerät auf ein noch funktionstüchtiges Zentralsteuergerät umschalten, ohne dass das Bedienpersonal der Automatisierungsanlage hierzu tätig werden muss. Dadurch, dass über die zwischen den Zentralsteuergeräten vorhandene Datenleitung lediglich Lebenszeichensignale ausgetauscht werden müssen, werden keine besonderen Anforderungen an die Datenleitung gestellt.

Die oben genannte Aufgabe hinsichtlich des Automatisierungssystems wird durch ein Automatisierungssystem zum Bedienen und/oder Beobachten mindestens eines Feldgerätes gelöst mit zumindest zwei Zentralsteuergeräten, die dieselbe Automatisierungssoftware ausführen, mindestens einem mit den Zentralsteuergeräten über eine Datenverbindung verbundenen Feldgerät, das von den Zentralsteuergeräten erzeugte erste und zweite gleichartige Befehle empfängt, und einer dem Feldgerät zugeordneten Befehlerkennungseinrichtung, die einzig einen solchen der ersten und zweiten Befehle zur Ausführung freigibt, der zuerst empfangen wird. Ein solches Automatisierungssystem kann aufgrund der nicht benötigten Synchronisation der Zentralgeräte untereinander besonders aufwandsarm und damit kostengünstig bereitgestellt werden.

Anhand der nachfolgenden Ausführungsbeispiele wird die Erfindung näher erläutert. Hierzu zeigen
- Figur 1: eine schematische Ansicht eines ersten Ausführungsbeispiels eines Automatisierungssystems in einem Blockschaltbild, in
- Figur 2: eine schematische Ansicht eines zweiten Ausführungsbeispiels eines Automatisierungssystems in einem Blockschaltbild, und in
- Figur 3: eine schematische Ansicht eines in dem Automatisierungssystem gemäß Figur 2 verwendeten Feldgerätes.

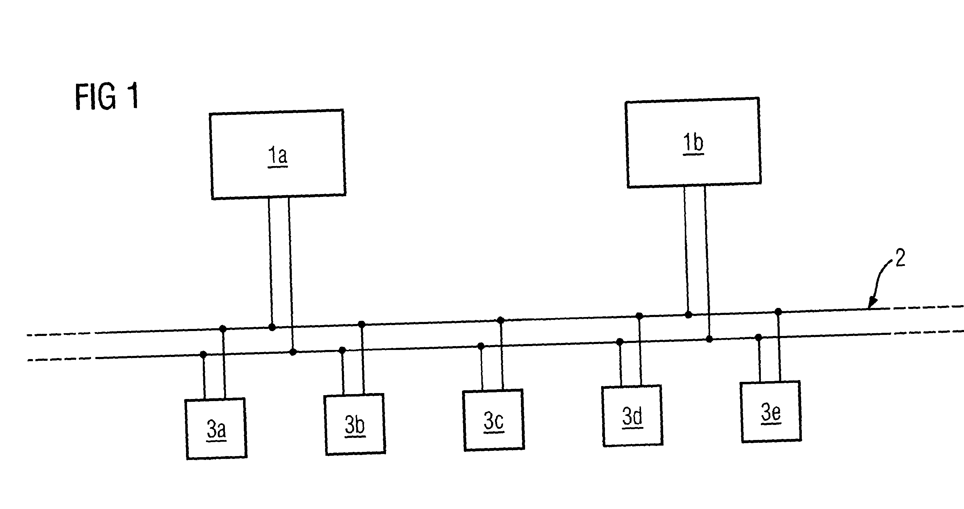

Das in Figur 1 beispielhaft aufgezeigte Automatisierungssystem besteht aus einem ersten Zentralsteuergerät 1a und einem zweiten Zentralsteuergerät 1b Die Zentralsteuergeräte 1a und 1b sind über einen redundant ausgeführten Datenbus 2 mit Feldgeräten 3a bis 3e verbunden. Die Feldgeräte 3a bis 3e sind wiederum auf in Figur 1 nicht dargestellte Weise mit einer zu automatisierenden Anlage bzw. einem zu automatisierenden Prozess verbunden. Im Folgenden soll hierzu beispielhaft angenommen werden, dass es sich um ein elektrisches Energieversorgungsnetz handelt und die Feldgeräte 3a bis 3e elektrische Schutz- und Leitgeräte darstellen.

Zur Steuerung des in Figur 1 nicht dargestellten elektrischen Energieversorgungsnetzes werden von dem Zentralsteuergerät 1a erste und von dem Zentralsteuergerät 1b zweite Befehle erzeugt. Hierbei soll die Bezeichnung "erste" und "zweite" Befehle nicht auf eine bestimmte zeitliche Abfolge hinweisen, es handelt sich lediglich um Befehle, die von dem ersten und dem zweiten Zentralsteuergerät generiert werden. Hierzu führen beide Zentralsteuergeräte 1a und 1b dieselbe Automatisierungssoftware aus, wobei sie bei dieser Ausführung nicht synchronisiert arbeiten. Die Befehle werden über den Datenbus 2, der entweder ein doppelt ausgeführter Datenbus oder ein Datenbus in einer Ringstruktur sein kann, an die Feldgeräte 3a bis 3e übertragen. Da die Zentralsteuergeräte 1a und 1b sich untereinander nicht abstimmen und auch nicht synchronisiert arbeiten, kann es vorkommen, dass ein gleichartiger Befehl für ein bestimmtes Feldgerät, beispielsweise das Feldgerät 3a, sowohl von dem ersten Zentralsteuergerät 1a als auch von dem zweiten Zentralsteuergerät 1b erzeugt und an das Feldgerät 3a übertragen wird. Dieses Feldgerät 3a führt die empfangenen Befehle aus. Es ist bei bestimmten Befehlen, beispielsweise beim Schließen eines Schalters, nämlich möglich, den Befehl innerhalb sehr kurzer Zeit einfach ein zweites Mal auszuführen, was eine Fehlermeldung der Art "Schalter bereits geschlossen" zur Folge hätte.

Die Feldgeräte 3a bis 3e werden üblicherweise auch mit Messwertaufnehmern, wie beispielsweise Spannungs- und/oder Stromwandlern, mit dem elektrischen Energieversorgungsnetz verbunden sein. Von diesen empfangen die Feldgeräte 3a bis 3e Messsignale, die sie in Messdaten umwandeln und an die Zentralsteuergeräte 1a und 1b übertragen. Ebenso werden Meldungen, wie beispielsweise Bestätigungen einer ausgeführten Aktion oder Alarmmeldungen bei Überschreiten eines bestimmten Grenzwertes (z.B. durch einen gemessenen Strom) an die Zentralsteuergeräte 1a und 1b übertragen. Hierbei werden alle von den Feldgeräten 3a bis 3e an die Zentralsteuergeräte 1a und 1b übertragenen Messdaten sowohl an das erste 1a als auch an das zweite Zentralsteuergerät 1b übertragen, damit in beiden Zentralsteuergeräten 1a und 1b jeweils dieselbe Datenbasis vorliegt und sie sich nicht untereinander abgleichen müssen. Da die Zentralsteuergeräte 1a und 1b mit derselben Automatisierungssoftware arbeiten, werden sie auf gleiche Eingangsmeldungen auch in gleicher Weise reagieren und daher ggf. entsprechende gleichartige Befehle an die Feldgeräte 3a bis 3e zurückschicken.

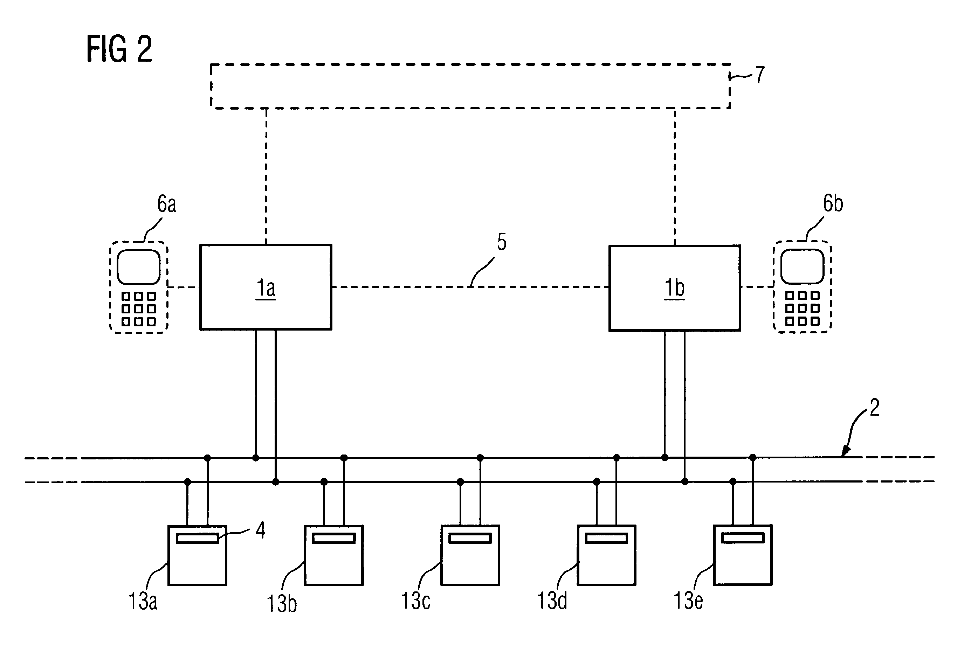

Figur 2 zeigt ein weiteres Ausführungsbeispiel eines Automatisierungssystems. Das Automatisierungssystem gemäß Figur 2 unterscheidet sich von demjenigen gemäß Figur 1 im Wesentlichen durch eine weitere Funktion der eingesetzten Feldgeräte, die daher abweichend von Figur 1 mit den Bezugszeichen 13a bis 13e gekennzeichnet sind.

Da gerade bei komplexeren Automatisierungssystemen ein Feldgerät 13a jeden Befehl nur ein einziges Mal ausführen soll, überprüft es gemäß Figur 2 mit einer Befehlerkennungseinrichtung 4, die üblicherweise ein Bestandteil der Gerätesoftware des Feldgerätes 13a sein wird, ob der jeweils empfangene Befehl bereits zuvor schon empfangen worden ist und ignoriert den empfangenen Befehl in diesem Fall. Mit anderen Worten führt das Feldgerät 13a nur solche Befehle aus, die es erstmalig empfängt. Auf diese Weise kann sichergestellt werden, dass das Feldgerät 13a jeden Befehl nur einmal ausführt und nicht mehrfach hintereinander.

Um keine Widersprüchlichkeiten beim Ausführen der empfangenen ersten und zweiten Befehle zu erzeugen, können die Feldgeräte 13a bis 13e beispielsweise während der Ausführung eines Befehls die Ausführung weiterer empfangener Befehle sperren. Dies kann beispielsweise dann von großer Wichtigkeit sein, wenn von dem jeweiligen Feldgerät ein aus mehreren Teilbefehlen bestehender Befehl, also eine Befehlsfolge, ausgeführt wird und diese nicht durch einen weiteren, nicht zu der Befehlsfolge gehörenden Befehl unterbrochen werden soll. Außerdem wird hierdurch das gleichzeitige Ausführen zweier widersprüchlicher Befehle verhindert.

Nach der Durchführung eines Befehls kann außerdem vorgesehen sein, dass das Feldgerät die Durchführung desselben Befehls für eine bestimmte Zeitdauer nach der erstmaligen Durchführung sperrt, bevor es denselben Befehl ein weiteres Mal annimmt. Hierdurch wird das Durchführen doppelt gesendeter Befehle verhindert.

Sollen in dem Automatisierungssystem insbesondere auch sogenannte abgeleitete Befehle, d. h. Befehle, die auf Messdaten und Meldungen der Feldgeräte 13a bis 13e zurückgehen, bearbeitet werden können, so bietet es ich an, die zentralen Steuergeräte 1a und 1b mittels einer einfachen Datenleitung 5 untereinander zu verbinden. Über diese Datenleitung können einerseits die Zentralsteuergeräte 1a und 1b über die Datenleitung 5 ihre Zuständigkeiten festlegen. Hierzu wird ein Zentralsteuergerät, beispielsweise das Zentralsteuergerät 1a, als sogenanntes Master-Zentralsteuergerät festgelegt. Dieses Master-Zentralsteuergerät ist im Folgenden das führende Zentralsteuergerät und für die oben genannten abgeleiteten Befehle oder auch für Befehlsfolgen zuständig. Es kann aber auch vorgesehen sein, dass das führende Zentralsteuergerät sämtliche an die Feldgeräte zu sendenden Befehle übernimmt, während das nicht führende Zentralsteuergerät, in diesem Fall das Zentralsteuergerät 1b, keine eigenen Befehle an die Feldgeräte aussendet, im übrigen aber dieselben Aktionen durchführt, wie das führende Zentralsteuergerät 1a.

Andererseits können zwischen den Zentralsteuergeräten 1a und 1b über die Datenleitung 5 auch sogenannte Lebenszeichen-Signale übermittelt werden. Das bedeutet, dass jedes Zentralsteuergerät in regelmäßigen Abständen ein Signal aussendet, um dem anderen Zentralsteuergerät mitzuteilen, dass es noch funktionsfähig ist. Alternativ zu den Lebenszeichen-Signalen kann auch vorgesehen sein, dass ein Zentralsteuergerät 1a eine Anfrage an das andere Zentralsteuergerät 1b schickt und auf eine Antwort auf die gesendete Anfrage wartet. Bleibt diese Antwort oder das Lebenszeichen-Signal aus, so wird erkannt, dass das entsprechende Zentralsteuergerät ausgefallen ist. Handelt es sich bei dem ausfallenden Zentralsteuergerät um das Master-Zentralsteuergerät, so wird ein anderes Zentralsteuergerät zum Master-Zentralsteuergerät ernannt. Auf diese Weise kann das Automatisierungssystem ohne Zeitverzug weiterarbeiten.

Mit den Zentralsteuergeräten 1a und 1b können außerdem lokale Bedieneinrichtungen 6a und 6b verbunden sein, die eine Vorortbedienung des entsprechenden Zentralsteuergeräts ermöglichen. Bei Ausfall eines Zentralsteuergerätes zeigt dieses auf der zugehörigen Bedieneinrichtung den Ausfall an. Auf diese Weise wird das Bedienpersonal über den Ausfall informiert und kann im Folgenden sämtliche Anweisungen an dem weiteren Zentralsteuergerät eingeben.

Die Zentralsteuergeräte 1a und 1b können auch mit einer Leitstelleneinrichtung 7 verbunden sein, von der sie Anweisungen erhalten, die sie in Befehle für die elektrischen Feldgeräte 13a bis 13e umsetzen. Ebenso senden die Zentralsteuergeräte 1a und 1b an die Leitstelleneinrichtung 7 Meldungen und Messdaten der Feldgeräte 13a bis 13e weiter. Ein Ausfall eines Zentralsteuergerätes wird auch in der Leitstelleneinrichtung 7 angezeigt, so dass das Bedienpersonal auf das zweite Zentralsteuergerät ausweichen kann.

Erkennen die Zentralsteuergeräte über eine ggf. vorhandene Datenleitung 5 selbstständig den Ausfall eines Zentralsteuergerätes, so kann die Umschaltung der Bedienung auf das jeweils noch intakte Zentralsteuergerät auch automatisch erfolgen und muss nicht vom Bedienpersonal vorgenommen werden.

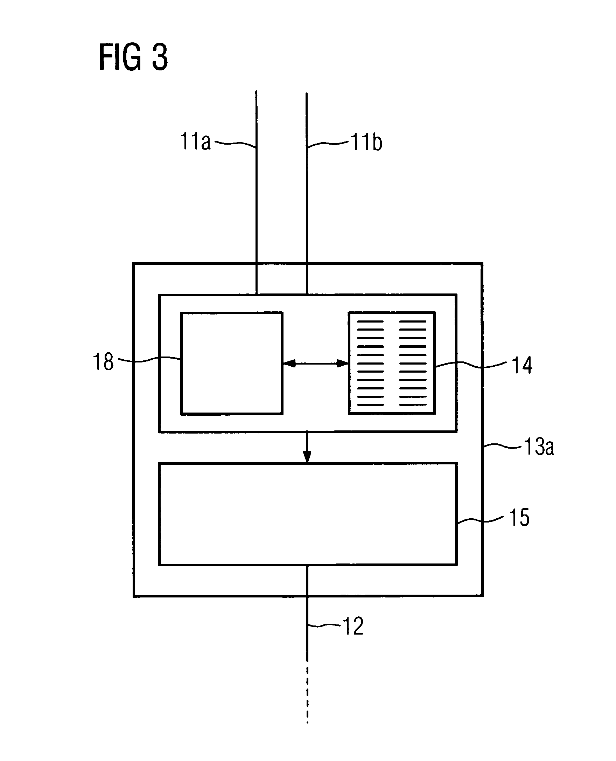

Figur 3 zeigt ein Ausführungsbeispiel, wie ein Feldgerät überprüfen kann, ob es einen empfangenen Befehl bereits zuvor schon empfangen hat. Hierzu zeigt Figur 3 beispielhaft das Feldgerät 13a, das über redundante Verbindungsleitungen 11a und 11b mit dem in Figur 1 gezeigten Datenbus 2 verbunden ist. Über eine weitere Verbindungsleitung 12 kann das Feldgerät 13a mit Sensoren und Aktoren in dem elektrischen Energieversorgungsnetz verbunden sein.

Empfängt das elektrische Feldgerät 13a über eine der verbindungsleitungen 11a bzw. 11b einen Befehl von einem der Zentralsteuergeräte 1a und 1b, so wird dieser Befehl von einer Prüfeinheit 18 mit Befehlen in einer Befehlsliste 14 verglichen. Die Befehlsliste 14 enthält all diejenigen Befehle, die das Feldgerät 13a bereits zuvor schon empfangen und ausgeführt hat. Stellt die Prüfeinheit 18 fest, dass der empfangene Befehl bereits in der Befehlsliste 14 enthalten ist, so wird die Ausführung dieses Befehls gesperrt. Stellt die Prüfeinheit 18 jedoch fest, dass der empfangene Befehl nicht in der Befehlsliste 14 vorhanden ist, so wird der Befehl an eine Ausführeinheit 15 des Feldgerätes 13a übergeben und ausgeführt. Außerdem wird der ausgeführte Befehl in die Befehlsliste 14 aufgenommen. Üblicherweise werden die Prüfeinrichtung 18, die Befehlsliste 14 sowie die Ausführeinheit 15 des Feldgerätes 13a in einer Gerätesoftware des Feldgerätes 13a realisiert sein.

Um nicht einen einmal ausgeführten Befehl für alle Zeiten von einer weiteren Ausführung zu sperren, können beispielsweise die in der Befehlsliste 14 gespeicherten Befehle nach einer vorgegebenen Zeitdauer wieder aus der Befehlsliste 14 gelöscht werden. Andererseits kann auch vorgesehen sein, dass von der Prüfeinheit 18 nur die jeweils letzten n-Befehle in der Befehlsliste 14 zur Ausführung gesperrt werden, wobei n eine vorgebbare Befehlsanzahl sein kann. Hierdurch kann beispielsweise erreicht werden, dass jeweils die letzten fünf Befehle zur wiederholten Ausführung gesperrt werden sollen. Somit wird erreicht, dass solche Befehle, die von beiden Zentralsteuergeräten 1a und 1b an das Feldgerät 13a geschickt worden sind, nur einmal ausgeführt werden. Die vorgebbare Zeitdauer bzw. die vorgegebene Befehlsanzahl n ist hierbei so zu wählen, dass redundante, also doppelt vorkommende, Befehle sicher gesperrt werden, eine gewollte Ausführung desselben Befehls nach einer bestimmten Zeit - beispielsweise ein wiederholter Wiedereinschaltversuch eines Leistungsschalters - jedoch nicht gesperrt wird.

Obwohl bei der Beschreibung der Ausführungsbeispiele davon beispielhaft von zwei Zentralsteuergeräten ausgegangen worden ist, ist es dennoch auch möglich im Rahmen der Erfindung mehr als zwei Zentralsteuergeräte einzusetzen. Die Beschriebenen Funktionsweisen gelten analog auch für mehrere Zentralsteuergeräte.

## Patentansprüche

1. Verfahren zum Bedienen und/oder Beobachten mindestens eines Feldgerätes (13a), bei dem
- ein erstes eine Automatisierungssoftware ausführendes Zentralsteuergerät (1a) einen ersten Befehl zum Steuern des mindestens einen Feldgerätes (13a) erzeugt und diesen ersten Befehl an das mindestens eine Feldgerät (13a) sendet,
- zumindest ein weiteres die Automatisierungssoftware ausführendes Zentralsteuergerät (1b) einen zweiten gleichartigen Befehl zum Steuern des mindestens einen Feldgerätes (13a) erzeugt und diesen zweiten Befehl an das mindestens eine Feldgerät (13a) sendet,
**dadurch gekennzeichnet, dass**
- das mindestens eine Feldgerät (13a) die gesendeten ersten und zweiten Befehle empfängt und einzig denjenigen der gleichartigen ersten und zweiten Befehle ausführt, der zuerst bei ihm eintrifft.

2. Verfahren nach Anspruch 1,
**dadurch gekennzeichnet, dass**
- das mindestens eine Feldgerät (13a) Messdaten und/oder Meldungen erzeugt und diese sowohl an das erste (1a) als auch an das zumindest eine weitere Zentralsteuergerät (1b) sendet.

3. Verfahren nach Anspruch 1 oder 2,
**dadurch gekennzeichnet, dass**
- das mindestens eine Feldgerät (13a) während des Ausführens eines empfangenen Befehls die Annahme weiterer Befehle blockiert.

4. Verfahren nach einem der vorangehenden Ansprüche,
**dadurch gekennzeichnet, dass**
- das mindestens eine Feldgerät (13a) nach dem Empfang eines Befehls die Annahme eines gleichartigen Befehls für eine vorgegebene Zeitdauer blockiert.

5. Verfahren nach einem der vorangehenden Ansprüche,
**dadurch gekennzeichnet, dass**
- das mindestens eine Feldgerät (13a) zum Überprüfen, ob ein empfangener Befehl bereits ausgeführt worden ist, alle ausgeführten Befehle in einer Befehlsliste (14) speichert und überprüft, ob dieser empfangene Befehl bereits in der Befehlsliste (14) gespeichert ist, und
- das Ausführen solcher Befehle blockiert, die bereits in der Befehlsliste (14) gespeichert sind.

6. Verfahren nach Anspruch 5,
**dadurch gekennzeichnet, dass**
- das mindestens eine Feldgerät (13a) nur das Ausführen der letzten n Befehle blockiert, die in der Befehlsliste (14) gespeichert worden sind, wobei n eine vorgebbare Anzahl von Befehlen ist.

7. Verfahren nach Anspruch 5,
**dadurch gekennzeichnet, dass**
- gespeicherte Befehle nach einer vorgebbaren Zeitdauer wieder aus der Befehlsliste (14) gelöscht werden.

8. Verfahren nach einem der vorangehenden Ansprüche,
**dadurch gekennzeichnet, dass**
- die Zentralsteuergeräte (1a,1b) von ihnen jeweils zugeordneten lokalen Bedieneinrichtungen (6a,6b) Anweisungen entgegennehmen und daraus die ersten und zweiten Befehle für das mindestens eine Feldgerät erzeugen und
- die Zentralsteuergeräte (1a,1b) von dem mindestens einem Feldgerät (13a) empfangene Messdaten und/oder Meldungen an die lokalen Bedieneinrichtungen (6a,6b) übertragen.

9. Verfahren nach einem der vorangehenden Ansprüche,
**dadurch gekennzeichnet, dass**
- die Zentralsteuergeräte (1a,1b) von zumindest einer ihnen übergeordneten Leitstelleneinrichtung (7) Anweisungen entgegennehmen und daraus die ersten und zweiten Befehle für das mindestens eine Feldgerät (13a) erzeugen und
- die Zentralsteuergeräte (1a,1b) von dem mindestens einem Feldgerät (13a) empfangene Messdaten und/oder Meldungen an die Leistelleneinrichtung (7) übertragen.

10. Verfahren nach Anspruch 8 oder 9,
**dadurch gekennzeichnet, dass**
- ein Ausfall eines Zentralsteuergerätes (1a,1b) von einer übergeordneten Leitstelleneinrichtung (7) und/oder einer dem ausgefallenen Zentralsteuergerät (1a,1b) zugeordneten Bedieneinrichtung (6a,6b) angezeigt wird.

11. Verfahren nach einem der vorangehenden Ansprüche,
**dadurch gekennzeichnet, dass**
- das erste Zentralsteuergerät (1a) und das mindestens eine weitere Zentralsteuergerät (1b) mittels einer Datenleitung (5) verbunden sind und über diese Datenleitung (5) Lebenszeichensignale übertragen.

12. Verfahren nach, Anspruch 11,
**dadurch gekennzeichnet, dass**
- die Zentralsteuergeräte (1a,1b) ein Master-Zentralsteuergerät festlegen, das allein Befehlsfolgen an das mindestens eine Feldgerät (13a) sendet,
- die übrigen Zentralsteuergeräte einen Ausfall des Master-Zentralsteuergerätes an einem Ausbleiben von Lebenszeichen des Master-Zentralsteuergerätes erkennen und
- beim Ausfall des Master-Zentralsteuergerätes ein neues Master-Zentralsteuergerät festlegen.

13. Automatisierungssystem zum Bedienen und/oder Beobachten mindestens eines Feldgerätes (13a) mit
- zumindest zwei Zentralsteuergeräten (1a,1b), die dieselbe Automatisierungssoftware ausführen,
- mindestens einem mit den Zentralsteuergeräten (1a,1b) über eine Datenverbindung verbundenen Feldgerät (13a), das von den Zentralsteuergeräten (1a,1b) erzeugte erste und zweite gleichartige Befehle empfängt,
**gekennzeichnet durch**
- eine dem Feldgerät (13a) zugeordnete Befehlerkennungseinrichtung (4), die einzig einen solchen der ersten und zweiten Befehle zur Ausführung freigibt, der zuerst empfangen wird.

## Claims

1. Method for operating and/or observing at least one field device (13a), in which
- a first central control device (1a) implementing automation software produces a first command for controlling the at least one field device (13a) and transmits this first command to the at least one field device (13a),
- at least one further central control device (1b) implementing the automation software produces a second similar command for controlling the at least one field device (13a) and transmits this second command to the at least one field device (13a),
**characterized in that**
- the at least one field device (13a) receives the transmitted first and second commands and only implements that command of the similar first and second commands which it receives first.

2. Method according to Claim 1, **characterized in that**
- the at least one field device (13a) produces measurement data and/or messages and transmits them both to the first central control device (1a) and to the at least one further central control device (1b).

3. Method according to Claim 1 or 2, **characterized in that**
- the at least one field device (13a), whilst implementing a received command, blocks the acceptance of further commands.

4. Method according to one of the preceding claims,
**characterized in that**
- the at least one field device (13a), once a command has been received, blocks the acceptance of a similar command for a predetermined period of time.

5. Method according to one of the preceding claims,
**characterized in that**
- the at least one field device (13a), in order to check whether a received command has already been implemented, stores all of the implemented commands in a list of commands (14) and checks whether this received command is already stored in the list of commands (14), and
- blocks the implementation of those commands which are already stored in the list of commands (14).

6. Method according to Claim 5, **characterized in that**
- the at least one field device (13a) only blocks the implementation of the last n commands which have been stored in the list of commands (14), where n is a predeterminable number of commands.

7. Method according to Claim 5, **characterized in that**
- stored commands are deleted again from the list of commands (14) after a predeterminable period of time.

8. Method according to one of the preceding claims,
**characterized in that**
- the central control devices (1a, 1b) receive instructions from local operating devices (6a, 6b) associated with them in each case and, from them, produce the first and second commands for the at least one field device, and
- the central control devices (1a, 1b) transmit measurement data and/or messages received by the at least one field device (13a) to the local operating devices (6a, 6b).

9. Method according to one of the preceding claims,
**characterized in that**
- the central control devices (1a, 1b) receive instructions from at least one control center device (7) which is at a higher level than them and, from them, produce the first and second commands for the at least one field device (13a), and
- the central control devices (1a, 1b) transmit measurement data and/or messages received by the at least one field device (13a) to the control center device (7).

10. Method according to Claim 8 or 9, **characterized in that**
- a failure of a central control device (1a, 1b) is indicated by a higher-level control center device (7) and/or an operating device (6a, 6b) associated with the failed central control device (1a, 1b).

11. Method according to one of the preceding claims,
**characterized in that**
- the first central control device (1a) and the at least one further central control device (1b) are connected by means of a data line (5), and sign-of-life signals are transmitted via this data line (5).

12. Method according to Claim 11, **characterized in that**
- the central control devices (1a, 1b) determine a master central control device which, on its own, transmits command sequences to the at least one field device (13a),
- the remaining central control devices identify a failure of the master central control device from a lack of signs of life of the master central control device, and
- in the event of failure of the master central control device, determine a new master central control device.

13. Automation system for operating and/or observing at least one field device (13a) having
- at least two central control devices (1a, 1b), which implement the same automation software,
- at least one field device (13a), which is connected to the central control devices (1a, 1b) via a data link and receives first and second similar commands produced by the central control devices (1a, 1b),
**characterized by**
- a command identification device (4), which is associated with the field device (13a) and only allows that one of the first and second commands which is received first to be implemented.

## Revendications

1. Procédé pour commander et/ou observer au moins un appareil (13a) de terrain, dans lequel :
- un appareil (1a) central de commande exécutant un logiciel d'automatisation produit un premier ordre de commande du au moins un appareil (13a) de terrain et envoie ce premier ordre au au moins un appareil (13a) de terrain,
- au moins un autre appareil (1b) central de commande exécutant le logiciel d'automatisation produit un deuxième ordre de même type pour commander au moins un appareil (13a) de terrain et envoie ce deuxième ordre au au moins un appareil (13a) de terrain,
**caractérisé en ce que**
- le au moins un appareil (13a) de terrain reçoit les premier et deuxième ordres émis et exécute seulement celui des premier et deuxième ordres de même type qui lui arrive le premier.

2. Procédé suivant la revendication 1,
**caractérisé en ce que**
- le au moins un appareil (13a) de terrain produit des données de mesure et/ou des messages et les envoie à la fois au premier (1a) et au au moins un autre appareil (1b) central de commande.

3. Procédé suivant la revendication 1 ou 2,
**caractérisé en ce que**
- le au moins un appareil (13a) de terrain bloque la réception d'autres ordres pendant l'exécution d'un ordre reçu.

4. Procédé suivant l'une des revendications précédentes,
**caractérisé en ce que**
- le au moins un appareil (13a) de terrain bloque, après la réception d'un ordre, la réception d'un ordre de même type pendant un laps de temps prescrit.

5. Procédé suivant l'une des revendications précédentes,
**caractérisé en ce que**
- le au moins un appareil (13a) de terrain mémorise, pour contrôler si un ordre reçu a été exécuté, tous les ordres exécutés dans une liste (14) d'ordres et contrôle si cet ordre reçu est déjà mémorisé dans la liste d'ordres, et
- bloque l'exécution d'ordres qui ont été déjà mémorisés dans la liste (14) d'ordres.

6. Procédé suivant la revendication 5,
**caractérisé en ce que**
- le au moins un appareil (13a) de terrain ne bloque que l'exécution des n derniers ordres qui ont été mémorisés dans la liste (14) d'ordres, n étant un nombre d'ordres qui peut être prescrit.

7. Procédé suivant la revendication 5,
**caractérisé en ce que**
- des ordres mémorisés sont effacés de la liste (14) d'ordres après une durée pouvant être prescrite.

8. Procédé suivant l'une des revendications précédentes,
**caractérisé en ce que**
- les appareils (1a, 1b) centraux de commande reçoivent des instructions de dispositifs (6a, 6b) locaux de commande qui leurs sont respectivement associés et en produisent les premiers et deuxième ordres pour le au moins un appareil de terrain, et
- les appareils (1a, 1b) centraux de commande transmettent aux dispositifs (6a, 6b) locaux de commande des données de mesure et/ou des messages reçus par le au moins un appareil (13a) de terrain.

9. Procédé suivant l'une des revendications précédentes,
**caractérisé en ce que**
- les appareils (1a, 1b) centraux de commande reçoivent des instructions d'au moins un dispositif (7) de poste de conduite supérieur hiérarchiquement et en produisent les premier et deuxième ordres pour le au moins un appareil (13a) de terrain, et
- les appareils (1a, 1b) centraux de commande transmettent au dispositif (7) de poste de conduite des données de mesure et/ou des messages reçus par le au moins un appareil (13a) de terrain.

10. Procédé suivant la revendication 8 ou 9,
**caractérisé en ce que**
- une panne d'un appareil (1a, 1b) central de commande est indiquée par un dispositif (7) de poste de conduite supérieur hiérarchiquement et/ou par un dispositif (6a, 6b) de commande associé à l'appareil (1a, 1b) central de commande tombé en panne.

11. Procédé suivant l'une des revendications précédentes,
**caractérisé en ce que**
- le premier appareil (1a) central de commande et le au moins un autre appareil (1b) central de commande sont reliés au moyen d'une ligne (5) de données et transmettent des signaux de signe de vie par cette ligne (5) de données.

12. Procédé suivant la revendication 11,
**caractérisé en ce que**
- les appareils (1a, 1b) centraux de commande fixent un appareil de commande central maître, qui envoie seul des successions d'ordres au au moins un appareil (13a) de terrain,
- les autres appareils centraux de commande détectent une panne de l'appareil de commande central maître par une absence de signe de vie de l'appareil central de commande maître, et
- si l'appareil de commande central maître tombe en panne, un nouvel appareil de commande central maître est établi.

13. Système d'automatisation pour commander et/ou observer au moins un appareil (13a) de terrain, comprenant :
- au moins deux appareils (1a, 1b) centraux de commande qui exécutent le même logiciel d'automatisation,
- au moins un appareil (13a) de terrain qui est relié aux appareils (1a, 1b) centraux de commande par une liaison de données et qui reçoit des premier et deuxième instructions de même type produites par les appareils (1a, 1b) centraux de commande,
**caractérisé par**
- un dispositif (4) de détection d'ordres, qui est associé à l'appareil (13a) de terrain et qui n'autorise l'exécution que de celui des premier et deuxième ordres qui est reçu le premier.
